# EUROPEAN PATENT APPLICATION

(11) **EP 4 368 435 A1**
(43) Date of publication of application: **15.05.2024**
(21) Application number: 23202851.4
(22) Date of filing: 10.10.2023
(51) Int. Cl.: B60K 17/10, F16H 57/025

(54) **TRAVEL VEHICLE**

(30) Priority: 11.11.2022 JP 2022181303
(71) Applicant: Kubota Corporation, Osaka-shi, Osaka 556-8601 (JP)
(72) Inventor: YASUDA, Toshifumi, SAKAI-SHI, OSAKA, 5900908, (JP); SUZUKI, Hiroyuki, SAKAI-SHI, OSAKA, 5900908 (JP); UKAI, Tomoyuki, SAKAI-SHI, OSAKA, 5900908 (JP); TSUKADA, Yosuke, SAKAI-SHI, OSAKA, 5900908 (JP)
(74) Representative: Cabinet Beau de Loménie

(57) **Abstract**

A travel vehicle to which a standard HST (7) or a high-specification HST (8) are capable of being selectively mounted includes a body frame structure to which a transmission (6) is fixed and the standard HST (7) or the high-specification HST (8) is fixable rearward of the transmission (6). The transmission (6) includes a rear surface provided with a common connected section (60) connectable to a standard connection section (70) provided on a front surface of the standard HST (7) and a high-specification connection section (80) provided on a front surface of the high-specification HST (8).

## Description

### BACKGROUND OF THE INVENTION

### 1. Field of the Invention

The present invention relates to a vehicle to which a standard HST or a high-specification HST can be selectively mounted.

### 2. Description of the Related Art

An HST (Hydraulic Static Transmission) is mounted as a continuouslyvariable transmission device to a travel vehicle such as a work vehicle. In particular, in a multi-purpose vehicle or the like, a standard shoeless-type HST (a type of standard HST) and a shoe HST (a type of high-specification HST) with higher specifications than the shoeless type are used as HSTs.

A shoeless-type HST (standard HST) is mounted as a main transmission device to a multi-purpose vehicle disclosed in Patent Document 1 (JP 2007-239978A). In this shoeless-type HST, the leading end of a plunger piston is formed into a hemispherical surface, and this hemispherical surface is in direct contact with a bearing housing of a swash plate. The motive power of the engine is continuously shifted by the HST, and the shifted motive power is supplied to the front wheels and the rear wheels via an auxiliary transmission device.

In a combine harvester disclosed in Patent Document 2 (JP 2002-362176A), a shoeless-type low-pressure HST (standard HST) is used as a travel HST that is constantly driven, and a shoe-type high-pressure HST (high-specification HST) is used as a turning HST. A crawler travel apparatus is driven by the shifted motive power from the travel HST and the turning HST.

### SUMMARY OF THE INVENTION

When an HST is mounted to a work vehicle such as a work vehicle or a multi-purpose vehicle, for example, a standard HST is mounted to a vehicle that is driven under a standard load, and a high-specification HST is mounted to a vehicle that is driven under a high load. However, after a user has purchased a desired vehicle, due to a change in the travel purpose, failure of the HST, or the like, in some cases, there is desire to switch from the standard HST to a high-specification HST or to switch from the high-specification HST to a standard HST. In a conventional HST-equipped travel vehicle, only switching between the same HST caused by maintenance inspection or the like is given consideration, and therefore switching between HSTs with partially different shapes and structures requires removal of various devices of a transmission mechanism including the transmission, and change or addition of an HST support member. Switching between such HSTs is a very timeconsuming task.

An object of the present invention is to provide a travel vehicle in which it is possible to perform switching between a standard HST and a high-specification HST with a simple task.

In a travel vehicle according to the present invention, a standard HST or a high-specification HST are capable of being selectively mounted, and the travel vehicle includes: a left rear wheel unit, a right rear wheel unit, and a body frame structure to which a transmission is fixed and the standard HST or the high-specification HST is fixable rearward of the transmission, in which the transmission includes a rear surface provided with a common connected section connectable to a standard connection section provided on a front surface of the standard HST and a high-specification connection section provided on a front surface of the high-standard HST.

According to this configuration, when switching the HST, the main task is to remove the previously-mounted HST from the common connected section of the transmission and connect the HST to be mounted to the common connected section. That is, the common connected section provided on the rear surface of the transmission is connected to the standard connection section provided on the front surface of the standard HST or the high-specification connection section provided on the front surface of the high-specification HST, and therefore switching of the HST is realized by releasing the connection, removing the standard HST or high-specification HST rearward from the transmission, then inserting the high-specification HST or standard HST from the rear of the transmission into the rear surface of the transmission, and connecting the high-specification HST or standard HST. Switching between the standard HST and the high specification HST is a simple task because there is no need to remove the transmission.

The HST includes a hydraulic pump and a hydraulic motor and is quite heavy, and thus simply connecting the HST to the transmission using only a common connected part is not sufficient to support the HST in terms of the support structure dynamics. For this reason, it is preferable that the HST is connected to the body frame structure via some kind of fixing member. In the present invention, the body frame structure is provided with a common fixing frame connectable to the standard HST and the high-specification HST. The standard HST and high-specification HST are not only connected to the transmission using a common connected section, but are also connected to the body frame structure via a common fixing frame, and therefore the support of the HST is reinforced in terms of the support structure dynamics.

In the present invention, the body frame structure includes a pair of left and right main frames extending in a front-rear direction of a body of the travel vehicle, and a pair of left and right upper frames extending in the front-rear direction of the body above the main frames, and a space defined by the rear ends of the main frames and the upper frames is an access space for mounting the standard HST and the high-specification HST to the body frame structure. In this configuration, the space defined by the rear ends of the main frame and upper frame located at the rear of the vehicle body can be used as an access space for mounting the standard HST and high-specification HST to the body frame structure, and therefore when switching the HST, the task of bringing the removed HST to the outside from the rear section of the body and the task of bringing in the HST that is to be newly connected from the outside through the rear section of the body to the common connected section of the transmission are easier.

Since the high-specification HST has enhanced functions compared to the standard HST, the high-specification HST partially protrudes from the outline of the standard HST. If such a protruding section protrudes to the rear of the vehicle body instead of inside the vehicle body, it is necessary to guard this section. The high-specification HST rear guard and the standard HST rear guard, which are the guard members for this purpose, have mutually different shapes. In the present invention, the body frame structure further includes a common guard support section configured to support a rear guard for guarding a rearward protruding section of the standard HST or a rear guard for guarding a rearward protruding section of the high-specification HST. In this configuration, the guard support section for supporting the rear guard of the high- specification HST or the guard support section of the standard HST on the body frame structure is shared, and therefore the burden in terms of the design and cost of the HST switchable structure is reduced.

If the HST is disposed at the rear section of the vehicle body, a stabilizer that connects the left rear wheel unit and the right rear wheel unit needs to have a shape that avoids interference with the HST. For this reason, if the shape of the standard HST and the shape of the high-specification HST are different around the stabilizer, the stabilizer used while the standard HST is mounted and the stabilizer used while the high-specification HST is mounted will be different from each other. Due to this, the present invention further includes: a standard stabilizer configured to connect a left rear wheel unit and a right rear wheel unit and used while the standard HST is mounted; or a high-specification stabilizer configured to connect the left rear wheel unit and the right rear wheel unit, having a shape different from that of the standard HST, and used while the high-specification HST is mounted.

Regarding the structure of the transmission and the HST, the transmission shaft from the transmission and the input shaft of the HST (HST pump shaft) are connected to each other, and the output shaft of the HST (HST motor shaft) is connected to a gear shift input shaft of the transmission. In order to easily realize power transmission between the transmission and the HST when the HST is switched, in the present invention, the common connected section includes: a first transmission shaft exposed from the common connected section and connectable to an HST input shaft of the standard HST and an HST input shaft of the high-specification HST; and
a second transmission shaft exposed from the common connected section and connectable to an HST output shaft of the standard HST and an HST output shaft of the high-specification HST. With this configuration, when the standard HST and the high-specification HST are connected to the common connected section, it is easy to realize power transmission between the transmission and the HST due to the HST input shaft and the first transmission shaft being connected using a coupling or the like, and the HST output shaft and the second transmission shaft being connected using a coupling or the like.

In multi-purpose vehicles including off-road vehicles, shoeless-type HSTs are mounted to vehicles with standard load specifications, and shoe-type HSTs are mounted to vehicles with high load specifications. However, if the shoeless-type HST is broken, there are many requests to switch it for a shoe-type HST. In order to meet such a request, in the present invention, the standard HST is a shoeless-type HST, and the high-specification HST is a shoe-type HST, and a favorable travel vehicle of the present invention is a multi-purpose vehicle.

### BRIEF DESCRIPTION OF THE DRAWINGS

FIG. 1 is an overall side view of a multi-purpose vehicle.
FIG. 2 is a schematic diagram showing a power train of the multi-purpose vehicle.
FIG. 3 is a schematic diagram illustrating switching between a standard HST and a high-specification HST.
FIG. 4 is a rear view showing a common connected section of a transmission.
FIG. 5 is a front view showing a standard connection section of a standard HST.
FIG. 6 is a front view showing a high-specification connection section of a high-specification HST.
FIG. 7 is a perspective view showing a body frame structure.
FIG. 8 is a side view showing a surrounding area of a rear section of a standard HST.
FIG. 9 is a side view showing a surrounding area of a rear section of a high-specification HST.

### DETAILED DESCRIPTION OF PREFERRED EMBODIMENTS

Note that in this specification, unless otherwise specified, the term "front" means frontward in a front-rear direction (travel direction) of the vehicle body, and the term "rear" means rearward in the front-rear direction (travel direction) of the vehicle body. Also, the left-right direction or the lateral direction means a body transverse direction (body width direction) orthogonal to the front-rear direction of the vehicle body. "Above" or "below" refers to a positional relationship of the vehicle body in the vertical direction (orthogonal direction), and indicates a relationship in above-ground height.

Next, a multi-purpose vehicle will be described as one specific embodiment of a travel vehicle according to the present invention with reference to the drawings.

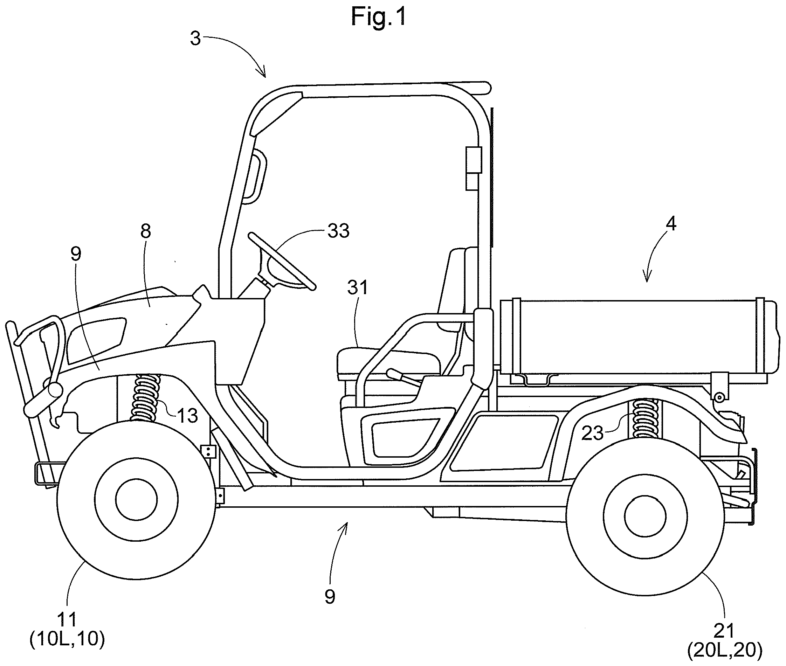

As shown in FIG. 1, the multi-purpose vehicle includes a front wheel unit 10, a rear wheel unit 20, a driving section 3 disposed between the front wheel unit 10 and the rear wheel unit 20, and a loading platform 4 disposed rearward of the driving section 3 and above the rear wheel unit 20.

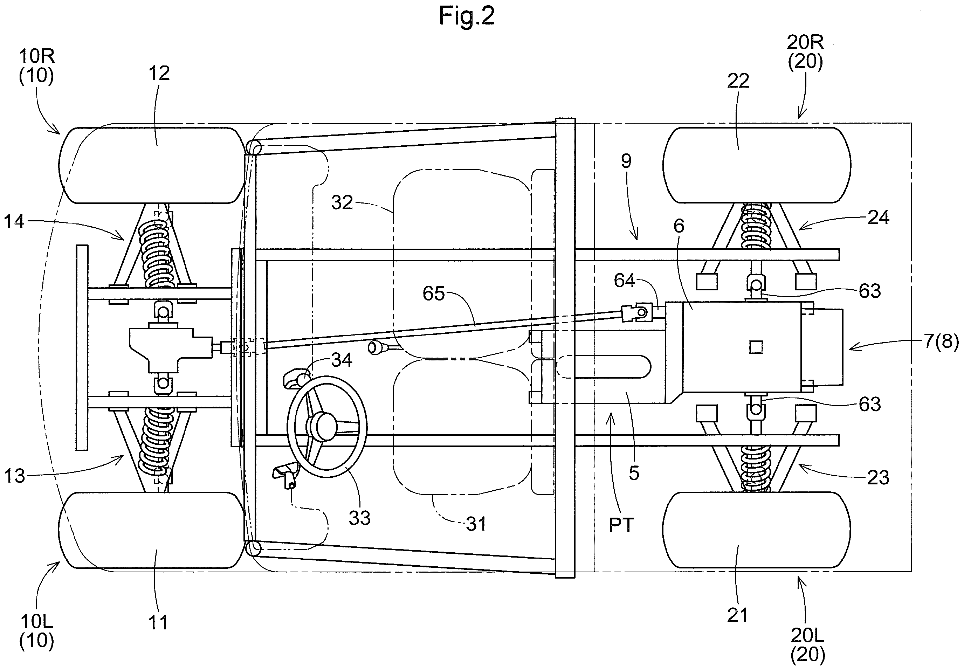

As shown in FIG. 2, the front wheel unit 10 includes a left front wheel unit 10L and a right front wheel unit 10R. The left front wheel unit 10L has a left front wheel 11 that can be freely steered, and the right front wheel unit 10R has a right front wheel 12 that can be freely steered. The left front wheel 11 is supported on a body frame structure 9 by a left suspension 13, and the right front wheel 12 is supported on the body frame structure 9 by a right suspension 14. The rear wheel unit 20 is constituted by a left rear wheel unit 20L and a right rear wheel unit 20R. The left rear wheel unit 20L has a left rear wheel 21, and the right rear wheel unit 20R has a right rear wheel 22. The left rear wheel 21 is supported on the body frame structure 9 by a left suspension 23, and the right rear wheel 22 is supported on the body frame structure 9 by a right suspension 24.

A power train PT extends below the loading platform 4, between the left rear wheel unit 20L and the right rear wheel unit 20R. This multi-purpose vehicle is a four-wheel drive type in which a driving force from the power train PT is transmitted to the front wheel unit 10 and the rear wheel unit 20. The rear end side of the loading platform 4 is swingable around a horizontal axis with respect to the rear end position of the vehicle body.

The driving section 3 is provided with a driver's seat 31 on which a driver sits and an auxiliary seat 32 provided adjacent to the driver's seat 31. Also, a steering wheel 33 for controlling the steering of the front wheels 1, a main gear shift lever 34, and the like are arranged in front of the driver's seat 31.

The power train PT includes an engine 5, a transmission 6, and a standard HST 7 serving as an HST (Hydraulic Static Transmission). Specifically, the engine 5, the transmission 6, and the standard HST 7 are integrally connected in the stated order from the front to the rear in the front-rear direction of the vehicle body, and are fixed to the body frame structure 9 to prevent vibration.

Although the internal structure of the transmission 6 is not shown in the drawings, this transmission 6 includes a sub-transmission that further shifts the driving force continuously shifted in the standard HST 7 in multiple stages, a gear-type forward and reverse transmission that switches between forward and reverse, a rear-wheel differential mechanism, and the like.

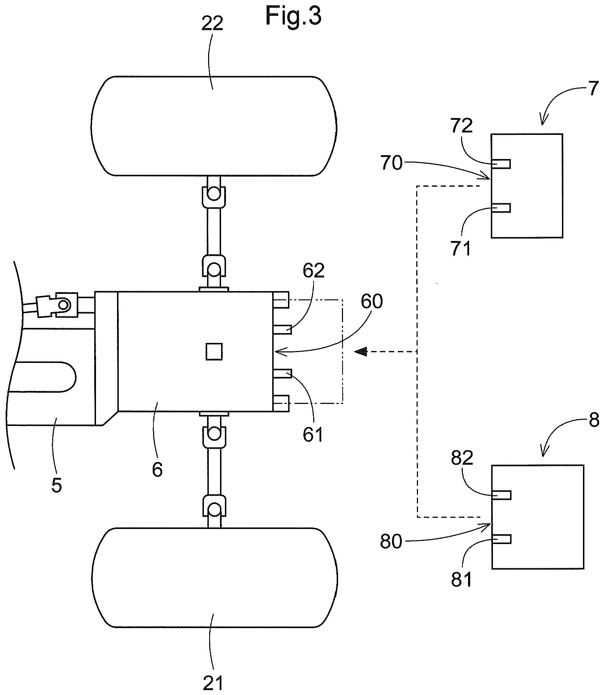

The engine 5 is disposed such that the axis of the engine output shaft (crankshaft: not shown) is oriented in the front-rear direction of the vehicle body. A first transmission shaft 61 (see FIG. 3) connected to the engine output shaft passes through the transmission 6 in the front-rear direction of the vehicle body and is connected to an HST input shaft 71 of the standard HST 7, as shown in FIG. 3. As a result, the driving force of the engine 5 is transmitted to the standard HST 7. An HST output shaft 72 of the standard HST 7 is connected to a second transmission shaft 62 that functions as an input shaft of the transmission 6. As a result, motive power that is continuously shifted with the standard HST 7 is transmitted to the transmission 6.

Furthermore, as shown in FIG. 2, the transmission 6 supplies the shifted motive power to the left rear wheel 21 and the right rear wheel 22 via the rear wheel output shaft 63, and supplies the shifted motive power to the left front wheel 11 and the right front wheel 12 via the front wheel output shaft 64 and the drive shaft 65.

As schematically shown in FIG. 3, in the travel vehicle of the present invention, the HST can be switched from the standard HST 7 to the high-specification HST 8, or from the high-specification HST 8 to the standard HST 7. The standard HST 7 and the high-specification HST 8 differ in at least some specifications, such as capacity, allowable load, speed change characteristics, and allowable working pressure, and as a result, they differ in at least some of their external dimensions. In this embodiment, the high-specification HST 8 is a shoe-type HST and the standard HST 7 is a shoeless-type HST.

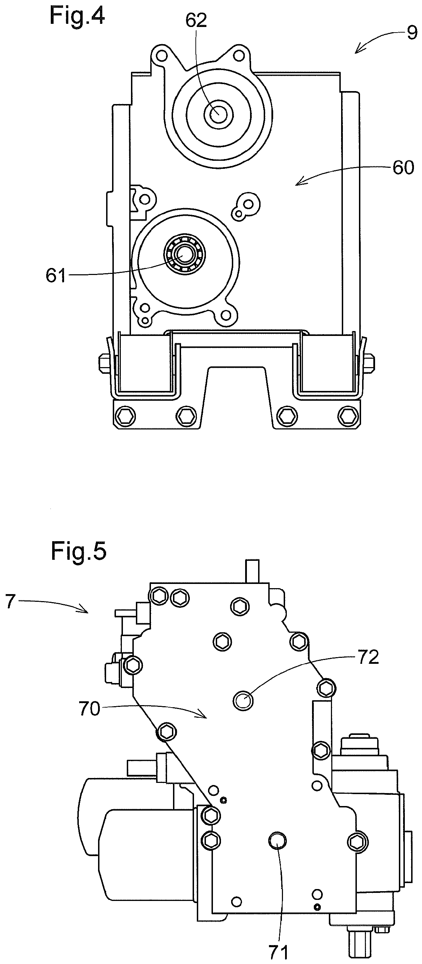

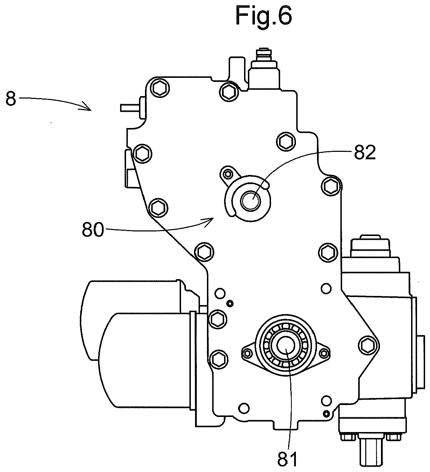

As shown in FIGS. 3 and 4, a common connected section 60 is provided on the rear surface of the transmission 6, and the first transmission shaft 61 and the second transmission shaft 62 are exposed at the common connected section 60. As shown in FIGS. 3 and 5, a standard connection section 70 that can connect to the common connected section 60 provided on the rear surface of the transmission 6 is provided on the front surface of the standard HST 7. As shown in FIGS. 3 and 6, the high specification HST 8 is also provided with a high-specification connection section 80 that can connect to the common connected section 60 provided on the rear surface of the transmission 6. Although the standard connection section 70 and the high-specification connection section 80 are given different names to distinguish them from each other, they have substantially the same structure and at least partially come into surface contact with the common connected section 60. The HST input shaft 71 serving as the input shaft of the standard HST 7 and the HST output shaft 72 serving as the output shaft of the standard HST 7 are exposed at the standard connection section 70. Similarly, an HST input shaft 81 serving as the input shaft of the high-specification HST 8 and an HST output shaft 82 serving as the output shaft of the high-specification HST 8 are exposed at the high-specification connection section 80. When connecting the common connected section 60 and the standard connection section 70 to each other, the HST input shaft 71 of the standard HST 7 is connected to the first transmission shaft 61 using a coupling or the like, and the HST output shaft 72 of the standard HST 7 is connected to the second transmission shaft 62 using a coupling or the like. When connecting the common connected part 60 and the high-specification connecting part 80 to each other, the HST input shaft 81 of the high-specification HST 8 is connected to the first transmission shaft 61 using a coupling or the like, and the HST output shaft 82 of the high-specification HST 8 is connected to the second transmission shaft 62 using a coupling or the like. That is, the first transmission shaft 61 and the second transmission shaft 62, the HST input shaft 71 and the HST output shaft 72 of the standard HST 7, and the HST input shaft 81 and the HST output shaft 82 of the high-specification HST 8 are respectively arranged in the same phase relationship with respect to the central axes in the front-rear direction of the vehicle body.

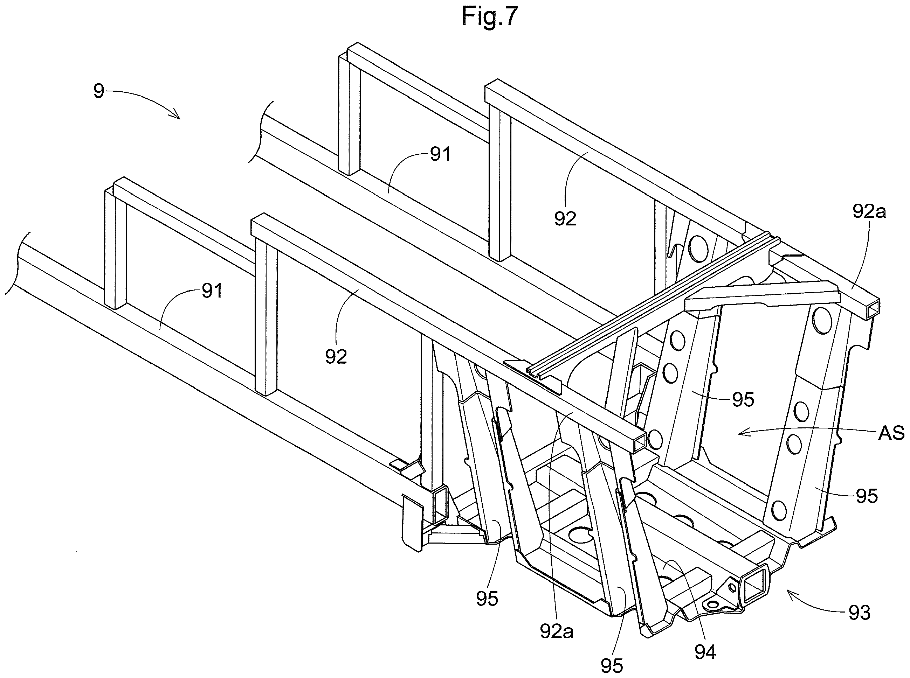

This multi-purpose vehicle has various structural features to facilitate the task of switching between the standard HST 7 and the high-specification HST 8. Those features will be described with reference to FIGS. 7 to 9.

As shown in FIG. 7, the body frame structure 9 includes a pair of left and right main frames 91 extending in the vehicle body front-rear direction, and a pair of left and right upper frames 92 extending above the main frames 91 in the vehicle body front-rear direction. The upper frames 92 extend further rearward from the rear ends of the main frames 91. A rear structure 93 functioning as a rear member of the main frames 91 is provided below rear extension sections 92a of the upper frames 92. The rear structure 93 includes a bottom plate 94 connected to the main frames 91 and extending horizontally, and a vertical arm group 95 connecting the left and right edges of the bottom plate 94 and the rear extension sections 92a of the upper frames 92. The transmission 6 is supported in the front region of the rear structure 93, and the standard HST 7 or the high-specification HST 8 is supported in the rear region of the rear structure 93. The space defined by the rear ends of the main frames 91, that is, the rear end of the rear structure 93 in this embodiment, and the rear ends of the upper frames 92, that is, the rear ends of the rear extension sections 92a, is an access space AS that is opened for the task of removing (the task of switching) the standard HST 7 and the high-specification HST8.

The front vertical arms of the vertical arm group 95 of the rear structure 93 are used to connect and fix the transmission 6. The rear vertical arms of the vertical arm group 95 of the rear structure 93 are used to connect and fix the standard HST 7 or the high-specification HST 8. That is, the vertical arm group 95 functions as a common fixed frame that can be connected to both the standard HST 7 and the high-specification HST 8.

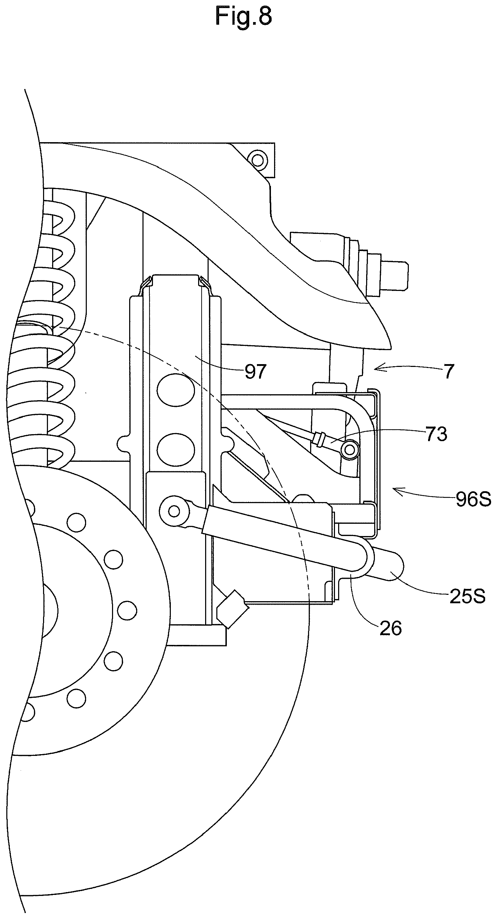

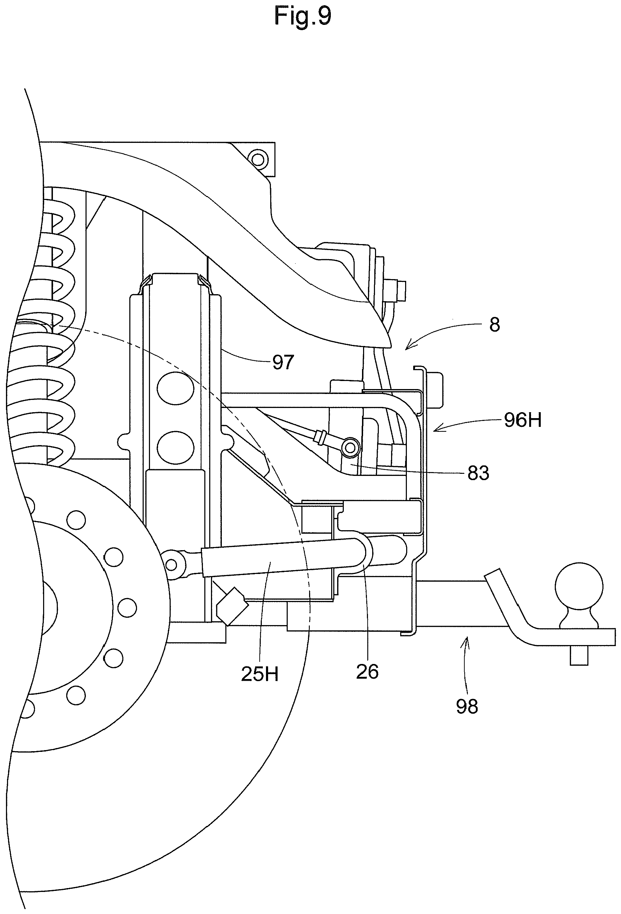

Due to the difference in shape between the standard HST 7 and the high-specification HST 8 (for example, the total length of the shoe-type HST is longer than the total length of the shoeless), here, the multi-purpose vehicle to which the standard HST 7 is mounted and the multi-purpose vehicle to which the high-specification HST 8 is mounted have different HST rear guard structures. FIG. 8 shows a standard HST rear guard 96S for guarding a rear protruding section of the standard HST 7, and FIG. 9 shows a high-specification HST rear guard 96H for guarding a rear protruding section of the high-specification HST 8. The standard HST rear guard 96S and the high-specification HST rear guard 96H are each supported by a common guard support section 97. In this embodiment, the common guard support section 97 is the rearmost arm of the vertical arm group 95 of the rear structure 93. When the standard HST 7 is mounted, the standard HST rear guard 96S is connected to the guard support section 97, and when the high-specification HST 8 is mounted, the high-specification HST rear guard 96H is connected to the guard support section 97. Note that, as shown in FIG. 9, a hitch body 98 used for towing work is connected to the rear end of the body frame structure 9 in the multi-purpose vehicle to which the high-specification HST 8 is mounted.

Due to the difference in shape between the standard HST 7 and the high-specification HST 8, the HST operation link used in the standard HST 7 (standard HST operation rod 73) and the HST operation link used in the high-specification HST 8 (high-specification HST operation rod 83) have different shapes from each other. A portion of the standard HST operation rod 73 is shown in FIG. 8 and a portion of the high-specification HST operation rod 83 is shown in FIG. 9. The standard HST operation rod 73 and the high-specification HST operation rod 83 can use most members in common.

Due to the difference in shape between the standard HST 7 and the high-specification HST 8, the stabilizer used in the multi-purpose vehicle to which the standard HST 7 is mounted (standard stabilizer 25S) and the stabilizer used in the multi-purpose vehicle to which the high-specification HST 8 is mounted (high specification stabilizer 25H) have different shapes from each other. FIG. 8 shows a standard stabilizer 25S, and FIG. 9 shows a high-specification stabilizer 25H. A stabilizer fixture 26 for fixing the standard stabilizer 25S and the high-specification stabilizer 25H can be used in common.

### [Other embodiments]

(1) In the above-described embodiment, a shoeless-type HST was used as the standard HST 7 and a shoe-type HST was used as the high-specification HST 8. However, the standard HST 7 and the high-specification HST 8 may be selected from shoeless-type HSTs of different specifications, or may be selected from shoe-type HSTs of different specifications. Various HSTs with different specifications can be selected as the standard HST 7 and the high-specification HST 8.
(2) In the above-described embodiment, the engine 5 was used as a motive power source in a motive power unit 2, but an electric motor or a hybrid type may also be used.
(3) In the embodiment described above, the vehicle was a four-wheel drive vehicle, but a front-wheel drive vehicle or a rear-wheel drive vehicle may also be used. Also, the vehicle may be of a three-wheel type.

Note that the configurations disclosed in the above embodiments (including other embodiments, the same applies below) can be applied in combination with configurations disclosed in other embodiments as long as there is no contradiction, and the embodiments disclosed in this specification are examples, and the embodiments of the present invention are not limited thereto, and can be modified as appropriate without departing from the object of the present invention.

### INDUSTRIAL APPLICABILITY

The present invention is applicable to a travel vehicle including an HST.

### LIST OF REFERENCE SIGNS

- 6: Transmission
- 9: Body frame structure
- 10: Front wheel unit
- 20: Rear wheel unit
- 23: Left suspension
- 24: Right suspension
- 25H: High-specification stabilizer
- 25S: Standard stabilizer
- 26: Stabilizer fixture
- 60: Common connected section
- 61: First transmission shaft
- 62: Second transmission shaft
- 70: Standard connection section
- 71: HST input shaft
- 72: HST output shaft
- 73: Standard HST operation rod
- 80: High-specification connection section
- 81: HST input shaft
- 82: HST output shaft
- 83: High-specification HST operation rod
- 91: Main frame
- 92: Upper frame
- 92a: Rear extension section
- 93: Rear structure
- 94: Bottom plate
- 95: Vertical arm group
- 96H: High-specification HST rear guard
- 96S: Standard HST rear guard
- 97: Guard support section
- AS: Access space
- PT: Power train

## Claims

1. A travel vehicle to which a standard HST (7) or a high-specification HST (8) are capable of being selectively mounted, comprising
a body frame structure (9) to which a transmission (6) is fixed and the standard HST (7) or the high-specification HST (8) is fixable rearward of the transmission (6),
wherein the transmission (6) includes a rear surface provided with a common connected section (60) connectable to a standard connection section (70) provided on a front surface of the standard HST (7) and a high-specification connection section (80) provided on a front surface of the high-standard HST (8).

2. The travel vehicle according to claim 1,
wherein the body frame structure (9) is provided with a common fixing frame connectable to the standard HST (7) and the high-specification HST (8).

3. The travel vehicle according to claim 1 or 2,
wherein the body frame structure (9) includes a pair of left and right main frames (91) extending in a front-rear direction of a body of the travel vehicle, and a pair of left and right upper frames (92) extending in the front-rear direction of the body above the main frames (91), and defines an access space (AS) for mounting the standard HST (7) and the high-specification HST (8) to the body frame structure (9).

4. The travel vehicle according to any one of claims 1 to 3,
wherein the body frame structure (9) further includes a common guard support section (97) configured to support a rear guard (96S) for guarding a rearward protruding section of the standard HST (7) or a rear guard (96H) for guarding a rearward protruding section of the high-specification HST (8).

5. The travel vehicle according to any one of claims 1 to 4, further comprising:
a standard stabilizer (25S) configured to connect a left rear wheel unit (20L) and a right rear wheel unit (20R) and used while the standard HST (7) is mounted; or
a high-specification stabilizer (25H) configured to connect the left rear wheel unit (20L) and the right rear wheel unit (20R), having a shape different from that of the standard HST (7), and used while the high-specification HST (8) is mounted.

6. The travel vehicle according to any one of claims 1 to 5,
wherein the common connected section (60) includes:
a first transmission shaft (61) exposed from the common connected section (60) and connectable to an HST input shaft (71) of the standard HST (7) and an HST input shaft (81) of the high-specification HST (8); and
a second transmission shaft (62) exposed from the common connected section (60) and connectable to an HST output shaft (72) of the standard HST (7) and an HST output shaft (82) of the high-specification HST (8).

7. The travel vehicle according to any one of claims 1 to 6,
wherein the standard HST (7) is a shoeless-type HST, and the high-specification HST (8) is a shoe-type HST.
